# EUROPÄISCHE PATENTANMELDUNG

(11) **EP 1 543 989 A1**
(43) Veröffentlichungstag der Anmeldung: **22.06.2005**
(21) Anmeldenummer: 03405909.7
(22) Anmeldetag: 19.12.2003
(51) Int. Cl.: B42D 15/00, B42D 15/04

(54) **Faltblatt**

(71) Anmelder: Virtuelle Stadt Thal-Gäu-Oberaargau, 4710 Balsthal (CH)
(72) Erfinder: Steineberg, Kurt, 4900 Langenthal (CH)
(74) Vertreter: Roshardt, Werner Alfred, Dipl.-Phys.

(57) **Zusammenfassung**

Ein Faltblatt (10) hat wenigstens einen ersten bedruckten Blattbereich (15), der mit einem ersten Aufdruck (25) bedruckt ist, einen zweiten Blattbereich (12, 14, 16, 18), der mit einem zweiten Aufdruck (52, 54, 56, 58) bedruckt ist und eine erste Faltlinie (31, 32, 33, 34). Das Faltblatt (10) ist entlang der ersten Faltlinie (31, 32, 33, 34) derart zusammenfaltbar, dass in einem ersten zusammengefalteten Zustand des Faltblatts (10) der erste Blattbereich (15) und der zweite Blattbereich (12, 14, 16, 18) übereinander liegen. Der erste Blattbereich (15) ist aus einem lichtdurchlässigen Blattmaterial gefertigt. Die beiden Blattbereiche (15, 12, 14, 16, 18) sind derart bedruckt und angeordnet, dass im ersten zusammengefalteten Zustand des Faltblatts (10) der zweite Aufdruck (52, 54, 56, 58) durch den ersten Blattbereich (15) hindurch derart sichtbar ist, dass sich der erste Aufdruck (25) und der zweite Aufdruck (52, 54, 56, 58) zu einer gedruckten Darstellung ergänzen.

Das Faltblatt (10) ermöglicht eine Mehrzahl von verschiedenen Darstellung auf einem vergleichbar kleinen Blattbereich (15). Es ist zudem einfach herstellbar und insbesondere als Prospekt verwendbar.

## Beschreibung

### Technisches Gebiet

Die Erfindung betrifft ein Faltblatt mit wenigstens zwei bedruckten Blattbereichen und einer Faltlinie, welcher entlang das Faltblatt zusammenfaltbar ist.

### Stand der Technik

Faltblätter der oben genannten Art sind insbesondere als Prospekte zur Verbreitung von Werbung weit verbreitet. Sie können mit Grafiken, Texten, Fotos und/oder weiteren grafisch darstellbaren Informationen oder Verzierungen bedruckt sein.

Häufig ist aber das grafisch darstellbare Material, dass in einem Prospekt dargestellt werden soll, derart umfangreich, dass es nicht auf einer einzigen Seite darstellbar ist, die eine noch bequem handhabbare Grösse aufweist. In solchen Fällen kann entweder Zuflucht genommen werden zu einem mehrseitigen Prospekt. Oder es kann ein Faltblatt aus einem sehr grossen Papierbogen hergestellt werden, wobei dieses Faltblatt dann vielfach zusammengefaltet werden muss, um noch einigermassen bequem handhabbar zu sein. Letzteres ist insbesondere zur Herstellung von topografischen Karten (z.B. Land- und Strassenkarten) gebräuchlich.

Aus der Druckschrift DE-U 1-297 13 314 ist weiter ein Faltprospekt bekannt, auf dessen Vorderseite nebeneinanderliegend mehrere Oberhemden aufgedruckt sind. Um die Kombination dieser Hemden mit verschiedenen Krawatten darzustellen, sind im Prospektblatt im Bereich der Knopfleisten der Hemden jeweils Öffnungen ausgebildet, die eine Form haben, welche einer gebundenen Krawatte entspricht. An der Rückseite des Prospektblatts ist eine Kartonscheibe verschiebbar angebracht, die mit einer Mehrzahl von unterschiedlichen Krawatten bedruckt ist. Die Scheibe kann gegenüber dem Prospektblatt derart verschoben werden, dass nacheinander unterschiedliche Krawatten durch die Krawattenöffnung einer Hemddarstellung hindurch sichtbar ist. Durch Verschieben der Kartonscheibe bezüglich dem Prospektblatt können verschiedene Kombination von Hemden und Krawatten sichtbar gemacht werden. Dadurch ist es nicht mehr nötig, für sämtliche mögliche Kombinationen von jeweils einer Krawatte mit einem Hemd je eine separate Abbildung im Prospekt darzustellen.

Der in der DE 297 13 314 beschriebene Prospekt ermöglicht zwar die Darstellung einer Mehrzahl von verschiedenen Darstellungen auf einem vergleichsweise kleinen Blattformat.

Die Fertigung des Prospekts ist jedoch aufwändig und kompliziert, und seine Bedienung ist gewöhnungsbedürftig.

### Darstellung der Erfindung

Aufgabe der Erfindung ist die Angabe eines insbesondere als Prospekt verwendbaren Faltblatts, das eine Mehrzahl von verschiedenen Darstellung auf einem vergleichbar kleinen Blattbereich ermöglicht und einfach herstellbar ist.

Die Lösung der Aufgabe ist durch die Merkmale des Anspruchs 1 definiert. Gemäss der Erfindung hat ein Faltblatt wenigstens einen ersten bedruckten Blattbereich, der mit einem ersten Aufdruck bedruckt ist, einen zweiten bedruckten Blattbereich, der mit einem zweiten Aufdruck bedruckt ist und eine erste Faltlinie. Das Faltblatt ist entlang der ersten Faltlinie derart zusammenfaltbar, dass in einem ersten zusammengefalteten Zustand des Faltblatts der erste Blattbereich und der zweite Blattbereich übereinander liegen. Der erste Blattbereich ist aus einem lichtdurchlässigen (d.h. einem durchsichtigen (transparenten) oder durchscheinenden) Blattmaterial gefertigt. Die beiden Blattbereiche sind derart bedruckt und angeordnet, dass im ersten zusammengefalteten Zustand des Faltblatts der zweite Aufdruck durch den ersten Blattbereich hindurch derart sichtbar ist, dass sich der erste Aufdruck und der zweite Aufdruck zu einer gedruckten Darstellung ergänzen.

Das Faltblatt hat in einem ungefalteten, offenen Zustand die Form eines ebenen, flachen Blatts. In diesem ungefalteten Zustand sind der erste Blattbereich und der zweite Blattbereich zwei voneinander verschiedene Blattbereiche. Von diesem ungefalteten Zustand aus ist das Faltblatt um die erste Faltlinie herum derart in den ersten zusammengefalteten Zustand zusammenfaltbar und wahlweise wieder auseinanderfaltbar, dass im ersten zusammengefalteten Zustand des Faltblatts der zweite Aufdruck durch den ersten Blattbereich hindurch sichtbar ist, wobei sich der erste Aufdruck und der zweite Aufdruck zu einer gedruckten Darstellung ergänzen. Dadurch wird die Möglichkeit geschaffen, auf einfache Weise im ersten Blattbereich zwei verschiedene Darstellungen darzustellen, nämlich zum Einen - im ungefalteten Zustand des Faltblatts - die aus dem ersten Aufdruck in Alleinstellung gebildete Darstellung und zum Anderen - im ersten zusammengefalteten Zustand des Faltblatts - die Darstellung, die aus den sich ergänzenden ersten und zweiten Aufdrucken gebildet wird.

Der erste Aufdruck, der auf den lichtdurchlässigen Blattbereich gedruckt ist, kann entweder mit einer vollständig lichtundurchlässigen Farbe (auch als deckende oder abdeckende Farbe bezeichnet) oder mit einer durchschimmernden (d.h. einer teilweise lichtdurchlässigen) Farbe gedruckt sein. Im ersten Fall ist der zweite Aufdruck lediglich durch den unbedruckten Bereich des ersten Blattbereichs hindurch sichtbar, während im zweiten Fall der zweite Aufdruck sowohl durch den unbedruckten Bereich als auch durch den bedruckten Bereich des ersten Blattbereichs hindurch sichtbar ist.

Der erste Aufdruck kann auf irgend einer der beiden Blattseiten des ersten Blattbereichs aufgedruckt sein, d.h. entweder auf derjenigen Seite, an der im ersten zusammengefalteten Zustand des Faltblatts der zweite Blattbereich anliegt, oder auf der anderen Seite des ersten Blattbereichs, die im ersten zusammengefalteten Zustand des Faltblatts vom zweiten Blattbereich abgewandt ist. Es ist auch möglich, dass der erste Aufdruck teilweise auf der einen und teilweise auf der anderen Seite des ersten Blattbereichs aufgedruckt ist.

Weiter ist es möglich, dass der erste Aufdruck zwischen den beiden Aussenseiten des ersten Blattbereichs gedruckt ist und gegen die beiden Aussenseiten hin von je einer Schicht aus lichtdurchlässigem Material bedeckt ist. Für diesen Zweck kann der erste Blattbereich z.B. einen Aufbau aus drei Schichten haben, die je aus einer lichtdurchlässigen Kunststofffolie bestehen. Dabei kann eine mit dem ersten Aufdruck versehene Folie zwischen zwei durchsichtigen äusseren Folien bzw. Folienschichten angeordnet sein, welche die mittlere Folie allseitig abdecken und dadurch schützen. Die beiden äusseren Folien können lediglich den Rändern des ersten Blattbereichs entlang miteinander verbunden sein, um eine Tasche zu bilden, in welcher die mit dem ersten Aufdruck versehene Folie aufgenommen ist. In diesem Fall besteht das lichtdurchlässige Blattmaterial, aus dem der erste Blattbereich gebildet ist, aus drei Folienschichten, von denen lediglich die beiden äusseren teilweise dem Rand entlang miteinander verbunden sind. Die drei Folien können aber auch zusammenlaminiert sein, so dass das lichtdurchlässige Blattmaterial, aus dem der erste Blattbereich gefertigt ist, aus mehreren zusammenlaminierten Schichten besteht.

Grundsätzlich ist es aber auch möglich, dass das lichtdurchlässige Blattmaterial, aus dem der erste Blattbereich gebildet ist, aus einem lediglich einschichtigen Blattmaterial besteht.

Auf einer Vorderseite des Faltblatts kann einer des ersten und zweiten Aufdrucks derart sichtbar dargestellt sein, dass er in - einer ersten Ausrichtung des ungefalteten Faltblatts mit im Wesentlichen horizontal angeordneter erster Faltlinie - aufrecht steht. Weiter kann der andere des ersten und zweiten Aufdrucks auf der Rückseite des Faltblatts derart sichtbar dargestellt sein, dass er - in derselben ersten Ausrichtung des ungefalteten Faltblatts - auf dem Kopf steht. Das Faltblatt kann dann um die horizontale erste Faltlinie herum derart in den ersten zusammengefalteten Zustand des Faltblatts zusammengefaltet werden, dass im ersten zusammengefalteten Zustand sowohl der erste als auch der zweite Aufdruck aufrecht stehen.

Es ist aber auch eine Ausbildung des Faltblatts derart möglich, dass auf der Vorderseite des ungefalteten Faltblatts einer des ersten und zweiten Aufdrucks aufrecht stehend und auf der Rückseite des ungefalteten Faltblatts der andere des ersten und zweiten Aufdrucks in derselben Ausrichtung des Faltblatts ebenfalls aufrecht stehend sichtbar dargestellt sind. Wird in diesem Fall das Faltblatt um eine im Wesentlichen vertikale erste Faltlinie herum in seinen ersten zusammengefalteten Zustand zusammengefaltet, dann stehen in diesem ersten zusammengefalteten Zustand des Faltblatts ebenfalls sowohl der erste als auch der zweite Aufdruck aufrecht da.

Vorzugsweise hat ein erfindungsgemässes Faltblatt nebst der ersten Faltlinie wenigstens eine weitere Faltlinie sowie nebst dem ersten und zweiten Blattbereich wenigstens einen weiteren Blattbereich. Das Faltblatt ist entlang der weiteren Faltlinie derart zusammenfaltbar, dass in einem weiteren zusammengefalteten Zustand des Faltblatts der erste und der weitere Blattbereich übereinander liegen. Dabei sind der erste und der weitere Blattbereich derart bedruckt und angeordnet, dass im weiteren zusammengefalteten Zustand des Faltblatts der weitere Aufdruck durch den ersten Blattbereich hindurch derart sichtbar ist, dass sich der erste Aufdruck und der weitere Aufdruck zu einer gedruckten Darstellung ergänzen. Dadurch wird die Möglichkeit geschaffen, im ersten Blattbereich insgesamt drei verschiedene Darstellungen darzustellen, nämlich erstens - im ungefalteten Zustand des Faltblatts - die aus dem ersten Aufdruck in Alleinstellung gebildete Darstellung, zweitens - im ersten zusammengefalteten Zustand des Faltblatts - die Darstellung, die aus den sich ergänzenden ersten und zweiten Aufdrucken gebildet wird und drittens - im weiteren zusammengefalteten Zustand des Faltblatts - die Darstellung, die aus den sich ergänzenden ersten und weiteren Aufdrucken gebildet wird.

In gleicher Weise können zusätzliche weitere Faltlinien und Blattbereiche vorgesehen sein, um im ersten Blattbereich zusätzliche weitere Darstellungen darstellen zu können.

Gemäss einem weiteren vorteilhaften Aspekt der Erfindung hat das Faltblatt in seinem ungefalteten Zustand die Form einer von einem konvexen Polygon begrenzten Fläche. Das heisst, dass die Umrissform des flachen Faltblatts aus geraden Linien zusammengesetzt ist, wobei im Innern dieser Umrissform kein Winkel zwischen zwei aneinanderstossenden grösser ist als 180 Grad. Mit anderen Worten sind sämtliche Aussenwinkel des durch die Umrissform des Faltblatts definierten Polygonzugs grösser als 180 Grad. Durch diese Form des Faltblatts wird gewährleistet, dass es vergleichsweise reissfest ausgebildet ist, weil Aussenwinkel von unter 180 Grad bei Manipulationen am Faltblatt stärker zum Einreissen tendieren als grössere Aussenwinkel.

Grundsätzlich sind im Rahmen der Erfindung aber auch andere Faltblattformen möglich, so dass das Faltblatt in seinem ungefalteten Zustand die Form einer von einem konkaven Polygon begrenzten Fläche hat. Ein solches Faltblatt kann zum Beispiel sternförmig ausgebildet sein.

Ein Faltblatt gemäss einer bevorzugten Ausführungsart der Erfindung hat eine quadratische Form und weist nebst der ersten Faltlinie genau drei weitere Faltlinien auf, wobei die insgesamt vier Faltlinien das Faltblatt in neun flächengleiche quadratische Blattbereiche unterteilen. Ein solches Faltblatt ist besonders einfach herzustellen. Es kann von seinem ungefalteten Zustand aus wahlweise in vier verschiedene zusammengefaltete Zustände zusammengefaltet werden, indem es jeweils um eine der vier Faltlinien herum zusammengefaltet wird.

Es sind aber auch andere Erfindungsvarianten möglich mit anderen Formen von Faltblättern und/oder anders angeordneten Faltlinien. So kann das Faltblatt in seinem ungefalteten Zustand z.B. die Form eines gleichseitigen Polygons aufweisen, insbesondere die Form eines gleichseitigen Drei-, Fünf-, Sechs- oder Acht-Ecks. Das ungefaltete Faltblatt kann aber auch eine rechteckige Form aufweisen und mit einer Vielzahl von parallel zu den beiden Seitenpaaren verlaufenden Faltlinien versehen sein, die ein mehrfaches Zusammenfalten des Faltblatts ermöglichen.

Der erste, lichtdurchlässige Blattbereich kann aus einer durchsichtigen Kunststofffolie gebildet sein. Für diesen Zweck geeignet sind z.B. Folien aus Polypropylen, Polyvinylchlorid, Polyester oder Polyethylen. Grundsätzlich sind aber auch andere lichtdurchlässige Blattmaterialien zur Herstellung des ersten Blattbereichs geeignet.

Vorzugsweise ist das gesamte Faltblatt aus einem einheitlichen Blattmaterial gefertigt. Dies ermöglicht eine besonders einfache Herstellung des Faltblatts gemäss der Erfindung. Ein für ein solches Faltblatt geeignetes Blattmaterial muss gut faltbar sein, um die eine oder mehreren Faltlinien im Faltblatt ausbilden zu können. Ein für diesen Aspekt der Erfindung geeignetes Blattmaterial kann z.B. eine durchsichtige Kunststofffolie sein.

Als Alternative zu einem aus einem einheitlichen Blattmaterial gefertigten Faltblatt kann aber ein erfindungsgemässes Faltblatt auch aus verschiedenen Blattmaterialien zusammengesetzt sein. Dadurch wird die Möglichkeit geschaffen, einzelne Blattbereiche (z.B. den ersten Blattbereich) aus Blattmaterialien zu fertigen, die lediglich schlecht oder überhaupt nicht faltbar sind.

Eine weitere Variante der Erfindung zeichnet sich dadurch aus, dass wenigstens einer des ersten und zweiten Aufdrucks eine topografische Karte darstellt. Der andere des ersten und zweiten Aufdrucks stellt Zusatzinformationen zu Orten auf der topografischen Karte dar, wobei diese Zusatzinformationen an denjenigen Stellen im zweiten Blattbereich dargestellt sind, die im ersten zusammengefalteten Zustand des Faltblatts (d.h. in der aus dem ersten Aufdruck und dem zweiten Aufdruck zusammengesetzten Darstellung) in der Nähe dieser Orte sichtbar sind.

Grundsätzlich können die ersten und zweiten Aufdrucke jedoch auch eine Vielzahl von anderen Informationen und/oder grafischen Darstellungen enthalten, die sich jeweils zu einer gedruckten Darstellung ergänzen.

Nebst dem ersten und zweiten Blattbereich kann ein Faltblatt mit einer topografischen Karte einen zusätzlichen Blattbereich aufweisen, der mit einer Werbebotschaft für eine Firma aus der Region bedruckt ist, die auf der topografischen Karte dargestellt ist. Auf diese Art wird ein origineller und deshalb besonders wirksamer Werbeeffekt erreicht.

Bei einem Faltblatt gemäss einer weiteren bevorzugten Ausführungsart der Erfindung ist der zweite Blattbereich ebenfalls aus einem lichtdurchlässigen Blattmaterial gefertigt. Das Faltblatt hat weiter eine zweite Faltlinie sowie einen dritten Blattbereich, wobei das Faltblatt entlang der ersten und zweiten Faltlinien derart zusammenfaltbar ist, dass in einem zweiten zusammengefalteten Zustand des Faltblatts der erste, der zweite und der dritte Blattbereich übereinander liegen. Dabei sind die drei Blattbereiche derart bedruckt und angeordnet, dass im zweiten zusammengefalteten Zustand des Faltblatts der dritte Aufdruck durch den ersten und den zweiten Blattbereich hindurch derart sichtbar ist, dass sich die drei Aufdrucke zu einer gedruckten Darstellung ergänzen. Die im ersten Blattbereich sichtbare Darstellung ist dann aus insgesamt drei verschiedenen Schichten oder Darstellungsebenen zusammengesetzt, nämlich aus dem ersten, zweiten und dritten Blattbereich, die mit dem ersten, zweiten resp. dritten Aufdruck versehen sind.

Als Alternative zu der obenerwähnten Ausführungsart der Erfindung mit einem lichtdurchlässigen zweiten Blattbereich ist es im Rahmen der vorliegenden Erfindung aber auch möglich, dass der zweite Blattbereich vollständig undurchsichtig ausgebildet ist. Dadurch wird die Möglichkeit geschaffen, die Vorderseite und Rückseite des zweiten Blattbereichs grafisch völlig unabhängig voneinander zu gestalten.

Für diesen Zweck kann z.B. der zweite Blattbereich aus einem lichtundurchlässigen Blattmaterial gefertigt sein, oder er kann vollständig mit lichtundurchlässiger Farbe bedruckt sein. Es ist aber auch möglich, dass der zweite Aufdruck zwischen zwei Aussenseiten des zweiten Blattbereichs gedruckt ist und gegen die beiden Aussenseiten hin von je einer Schicht aus lichtdurchlässigem Material bedeckt ist. Für diesen Zweck kann der zweite Blattbereich z.B. einen Aufbau aus drei oder mehr Schichten haben. Dabei können eine oder mehrere mit dem zweiten Aufdruck versehene Schichten aus bedruckbarem Blattmateriel zwischen zwei durchsichtigen äusseren Folien bzw. Folienschichten angeordnet sein, welche die mittleren Schichten allseitig abdecken und dadurch schützen. Die beiden äusseren Folien können lediglich den Rändern des zweiten Blattbereichs entlang miteinander verbunden sein, um eine Tasche zu bilden, in welcher die mit dem zweiten Aufdruck versehenen bedruckten Schichten aufgenommen sind. In diesem Fall besteht das Blattmaterial, aus dem der zweite Blattbereich gebildet ist, aus mehreren Blattschichten, von denen lediglich die beiden äussersten teilweise dem Rand entlang miteinander verbunden sind. Die Schichten können aber auch vollständig zusammenlaminiert sein, so dass das Blattmaterial, aus dem der zweite Blattbereich gefertigt ist, aus mehreren zusammenlaminierten Schichten besteht.

Grundsätzlich ist es aber auch möglich, dass das Blattmaterial, aus dem der zweite Blattbereich gebildet ist, aus einem lediglich einschichtigen Blattmaterial besteht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Vereinfachte, schematische Draufsicht auf die Vorderseite eines Faltblatts gemäss einer ersten Ausführungsart der Erfindung, in einem ungefalteten Zustand des Faltblatts;
- Fig. 2: vereinfachte, schematische Draufsicht auf die Rückseite des Faltblatts aus Fig. 1, in einem ungefalteten Zustand des Faltblatts;
- Fig. 3: vereinfachte, schematische Draufsicht auf die Vorderseite des Faltblatts aus Fig. 1, in einem ersten gefalteten Zustand des Faltblatts;
- Fig. 4: vereinfachte, schematische Draufsicht auf die Vorderseite des Faltblatts aus Fig. 1, in einem zweiten gefalteten Zustand des Faltblatts.

Grundsätzlich sind in den Figuren gleiche Teile mit gleichen Bezugszeichen versehen.

### Wege zur Ausführung der Erfindung

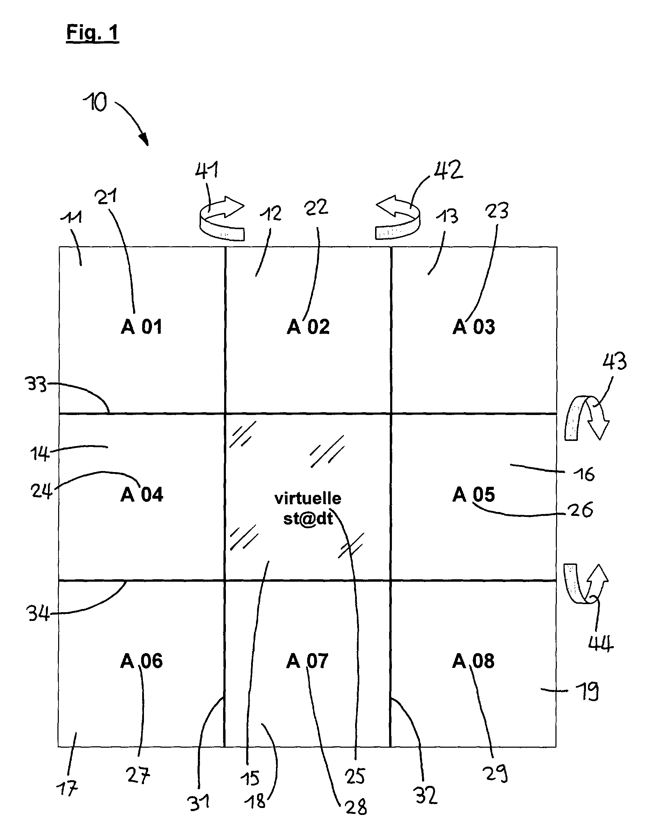

In den Figuren 1-4 ist ein Faltblatt 10 gemäss einer ersten Ausführungsart der Erfindung dargestellt.

Das gesamte in den Figuren 1-4 dargestellte Faltblatt 10 ist aus einem einheitlichen Blattmaterial in Form einer durchsichtigen, gut faltbaren Kunststofffolie gefertigt.

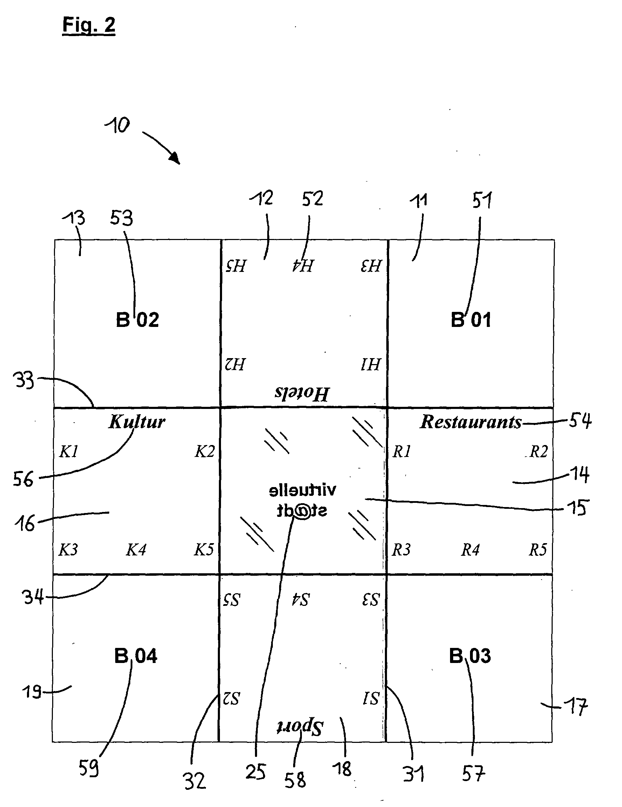

Das Faltblatt 10 hat in seinem ungefalteten Zustand, in dem es in den Figuren 1 und 2 dargestellt ist, eine quadratische Form. In den Figuren 1-4 ist das Faltblatt jeweils in einer Ausrichtung dargestellt, in der ein oberer Rand und ein unterer Rand des Faltblatts 10 horizontal verlaufen, während die beiden seitlichen Ränder des Faltblatts 10 in den Darstellungen der Figuren 1-4 vertikal verlaufen. Das Faltblatt 10 weist zwei parallel zum oberen und unteren Rand verlaufende horizontale Faltlinien 33, 34 und zwei parallel zu den seitlichen Rändern verlaufende vertikale Faltlinien 31, 32 auf. Die insgesamt vier Faltlinien 31, 32, 33, 34 sind derart angeordnet, dass sie das Faltblatt 10 in seinem ungefalteten Zustand in neun flächengleiche quadratische Blattbereiche 11 ... 19 unterteilen, die je eine Vorderseite und eine Rückseite haben, wobei die Vorderseiten der neun Blattbereiche 11 ... 19 insgesamt die Vorderseite des Faltblatts 10 bilden, während die Rückseiten der neun Blattbereiche 11 ... 19 insgesamt die Rückseite des Faltblatts 10 bilden.

In Fig. 1 ist das Faltblatt 10 in seinem ungefalteten Zustand von vorne mit Blick auf die Vorderseiten der neun Blattbereiche 11 ... 19 und somit mit Blick auf die Vorderseite des Faltblatts 10 dargestellt. Im Zusammenhang mit den vorliegenden Ausführungen zu dem in den Figuren 1-4 dargestellten Faltblatt 10 sind die Bezeichnung oben, unten, links, rechts, Vorderseite und Rückseite stets in Bezug auf die Darstellung in Fig. 1 zu verstehen. Die linke vertikale Faltlinie 31 ist zwischen drei linksseitigen Blattbereichen 11, 14, 17 und drei horizontal mittleren Blattbereichen 12, 15, 18 angeordnet. Die rechtsseitige vertikale Faltlinie 32 ist zwischen den drei horizontal mittleren Blattbereichen 12, 15, 18 und drei rechtsseitigen Blattbereichen 13, 16, 19 angeordnet. Die obere horizontale Faltlinie 33 ist zwischen drei oberen Blattbereichen 11, 12, 13 und drei vertikal mittleren Blattbereichen 14, 15, 16 angeordnet. Die untere horizontale Faltlinie 34 ist zwischen den drei vertikal mittleren Blattbereichen 14, 15, 16 und drei unteren Blattbereichen 17, 18, 19 angeordnet. Fig. 2 zeigt das Faltblatt 10 in seinem ungefalteten Zustand von hinten mit Blick auf die Rückseiten der neun Blattbereiche 11 ... 19 und somit mit Blick auf die Rückseite des Faltblatts 10.

Bei dem in den Figuren 1-4 dargestellten Faltblatt 10 sind sämtliche der insgesamt acht Blattbereiche 11, 12, 13, 14, 16, 17, 18, 19, die an einen oberen, unteren oder seitlichen Rand des Faltblatts 10 angrenzen, vollständig mit einer weissen, lichtundurchlässigen Farbe bedruckt. Dadurch wird in diesen acht Blattbereichen 11, 12, 13, 14, 16, 17, 18, 19 je ein weisser, undurchsichtiger Hintergrund geschaffen. Diese acht Blattbereiche 11, 12, 13, 14, 16, 17, 18, 19 sind jeweils unabhängig voneinander auf ihrer Vorderseite und auf ihrer Rückseite bedruckt. Aufgrund des weissen, vollständig undurchsichtigen Hintergrunds sind jeweils der Aufdruck 51, 52, 53, 54, 56, 57, 58, 59 auf der Rückseite eines dieser Blattbereiche 11, 12, 13, 14, 16, 17, 18, 19 nicht zusätzlich auch auf dessen Vorderseite oder der Aufdruck 21, 22, 23, 24, 26, 27, 28, 29 auf der Vorderseite eines Blattbereichs 11, 12, 13, 14, 16, 17, 18, 19 nicht zusätzlich auch auf dessen Rückseite sichtbar.

Auf den Vorderseiten der acht randseitigen Blattbereiche 11, 12, 13, 14, 16, 17, 18, 19 des Faltblatts 10 sind in einer Reihenfolge von links nach rechts und von oben nach unten acht Aufdrucke 21, 22, 23, 24, 26, 27, 28, 29 in Form je eines Schriftzugs "A 01" - "A 08" in normaler, d.h. aufrecht stehender Schrift aufgedruckt, wie in Fig. 1 zu sehen ist. In Fig. 2 ist erkennbar, dass auf den Rückseiten der vier an den Ecken des Faltblatts 10 angeordneten Blattbereiche 11, 13, 17, 19 vier Aufdrucke 51, 53, 57, 19 in Form je eines Schriftzugs "B 01" - "B 04" in aufrecht stehender Schrift aufgedruckt sind. Auf der Rückseite des oberen mittleren Blattbereichs 12 ist ein Aufdruck 52 in Form eines Schriftzugs "Hotels H 1 H2 H3 H4 H5" in auf dem Kopf stehender Schrift aufgedruckt, wobei der Schriftzug den Rändern dieses Blattbereichs 12 entlang verlaufend angeordnet ist. In ähnlicher Art ist auf der Rückseite des unteren mittleren Blattbereichs 18 ein Aufdruck in Form eines den Rändern dieses Blattbereichs 18 entlang verlaufenden Schriftzugs "Sport S1 S2 S3 S4 S5" in auf dem Kopf stehender Schrift aufgedruckt. Auf der Rückseite des mittleren linken Blattbereichs 14 ist ein Aufdruck 54 in Form eines den Rändern dieses Blattbereichs 14 entlang verlaufenden Schriftzugs "Restaurants R1 R2 R3 R4 R5" in aufrecht stehender Schrift aufgedruckt, und auf der Rückseite des mittleren rechten Blattbereichs 16 ist ein Aufdruck 56 in Form eines den Rändern dieses Blattbereichs 16 entlang verlaufenden Schriftzugs "Kultur K1 K2 K3 K4 K5" in aufrecht stehender Schrift aufgedruckt.

Im Gegensatz zu den acht randseitigen Blattbereichen 11, 12, 13, 14, 16, 17, 18, 19 des Faltblatts 10 hat der sowohl in Bezug auf die Horizontale als auch in Bezug auf die Vertikale in der Mitte des Faltblatts 10 angeordnete, zentrale Blattbereich 15, der als einziger der neun Blattbereiche 11, 12, 13, 14, 15, 16, 17, 18, 19 an keinen Rand des Faltblatts 10 angrenzt, einen unbedruckten und somit durchsichtigen Hintergrund. Folglich ist der auf der Vorderseite des zentralen Blattbereichs 15 mittig aufgedruckte Aufdruck 25 - der in aufrecht stehender Schrift gedruckte Schriftzug "virtuelle st@dt" - auf der Rückseite dieses Blattbereichs 15 in inverser Darstellung (d.h. spiegelbildlich) sichtbar, wie in Fig. 2 zu sehen ist.

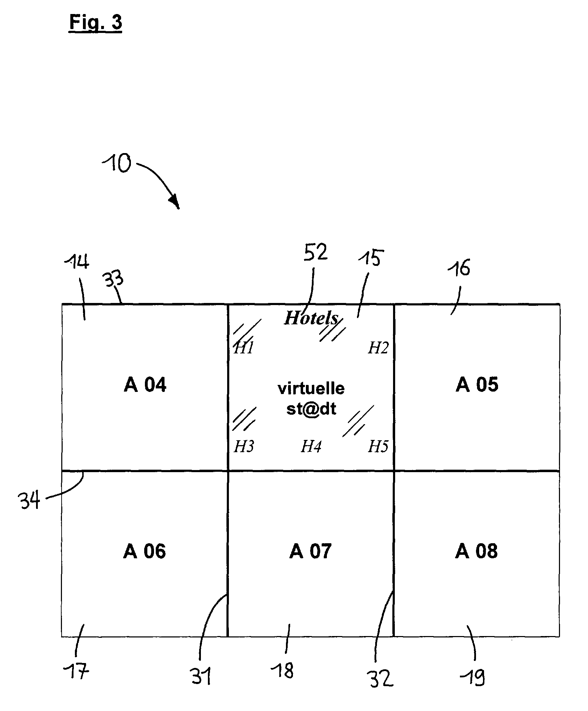

Wird das Faltblatt 10 ausgehend von seinem ungefalteten Zustand, wie er in den Figuren 1 und 2 dargestellt ist, um die obere horizontale Faltlinie 33 herum entsprechend dem Pfeil 43 derart zusammengefaltet, dass nach der Faltung jeweils alle drei oberen Blattbereiche 11, 12, 13 und ihre in horizontaler Richtung entsprechenden vertikal mittleren Blattbereiche 14, 15, 16 je paarweise übereinander liegen, wobei die paarweise übereinander liegenden Blattbereiche 11, 12, 13, 14, 15, 16 Rückseite an Rückseite aneinander anliegen, so wird der in Fig. 3 dargestellte erste zusammengefaltete Zustand des Faltblatts 10 erreicht. In diesem Zustand ist der Aufdruck 52 auf der Rückseite des oberen mittleren Blattbereichs 12 (d.h. der Schriftzugs "Hotels H1 H2 H3 H4 H5") von der Vorderseite her durch den zentralen Blattbereich 15 hindurch sichtbar. Dabei ist der Aufdruck 25 auf dem zentralen Blattbereich 15 (d.h. der Schriftzug "virtuelle st@dt") vom Aufdruck 52 auf der Rückseite des oberen mittleren Blattbereichs 12 (d.h. vom Schriftzug "Hotels H1 H2 H3 H4 H5") umringt, wobei beide Schriftzüge in aufrecht stehender Schrift dargestellt sind. Dadurch ergibt sich im zentralen Blattbereich 15 des Faltblatts 10 eine Darstellung, in welcher der Aufdruck 25 auf dem zentralen Blattbereich 15 durch den Aufdruck 52 auf der Rückseite des oberen mittleren Blattbereichs 12 ergänzt ist.

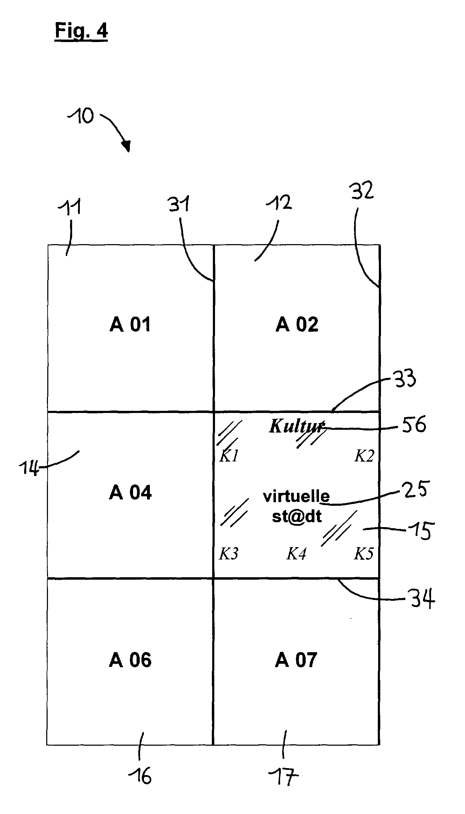

Wenn das Faltblatt 10 ausgehend von seinem ungefalteten Zustand um die rechte vertikale Faltlinie 32 herum entsprechend dem Pfeil 42 derart zusammengefaltet wird, dass nach der Faltung jeweils alle drei rechtsseitigen Blattbereiche 13, 16, 19 und ihre in vertikaler Richtung entsprechenden horizontal mittleren Blattbereiche 12, 15, 18 je paarweise übereinander liegen, wobei die paarweise übereinander liegenden Blattbereiche 13, 16, 19, 12, 15, 18 Rückseite an Rückseite aneinander anliegen, so wird der in Fig. 4 dargestellte zweite zusammengefaltete Zustand des Faltblatts 10 erreicht. In diesem Zustand ist der Aufdruck 56 auf der Rückseite des mittleren rechten Blattbereichs 16 (d.h. der Schriftzug "Kultur K1 K2 K3 K4 K5") von der Vorderseite her durch den zentralen Blattbereich 15 hindurch sichtbar. Dabei ist der Aufdruck 25 auf dem zentralen Blattbereich 15 (d.h. der Schriftzug "virtuelle st@dt") vom Aufdruck 56 auf der Rückseite des mittleren rechten Blattbereichs 16 (d.h. vom Schriftzug "Kultur K1 K2 K3 K4 K5") umringt, wobei beide Schriftzüge in aufrecht stehender Schrift dargestellt sind. Dadurch ergibt sich im zentralen Blattbereich 15 des Faltblatts 10 eine Darstellung, in welcher der Aufdruck 25 auf dem zentralen Blattbereich 15 durch den Aufdruck 56 auf der Rückseite des mittleren rechten Blattbereichs 16 ergänzt ist.

Auf analoge Art kann ausgehend vom ungefalteten Zustand des Faltblatts 10 durch eine Faltung des Faltblatts 10 entsprechend dem Pfeil 44 um die untere horizontale Faltlinie 34 herum ein zusammengefalteter Zustand (nicht dargestellt) des Faltblatts 10 erreicht werden, in welchem die Rückseite des unteren mittleren Blattbereichs 18 von der Vorderseite her durch den zentralen Blattbereich 15 hindurch sichtbar ist. Dabei ist der Aufdruck 25 auf dem zentralen Blattbereich 15 (d.h. der Schriftzug "virtuelle st@dt") vom Aufdruck 58 auf der Rückseite des unteren mittleren Blattbereichs 18 (d.h. vom Schriftzug "Sport S1 S2 S3 S4 S5") umringt.

Auf weitere analoge Art kann ausgehend vom ungefalteten Zustand des Faltblatts 10 durch eine Faltung des Faltblatts 10 entsprechend dem Pfeil 41 um die linke vertikale Faltlinie 31 herum ein zusammengefalteter Zustand (nicht dargestellt) des Faltblatts 10 erreicht werden, in welchem die Rückseite des mittleren linksseitigen Blattbereichs 14 von der Vorderseite her durch den zentralen Blattbereich 15 hindurch sichtbar ist. Dabei ist der Aufdruck auf dem zentralen Blattbereich 15 (d.h. der Schriftzug "virtuelle st@dt") vom Aufdruck 54 auf der Rückseite des mittleren linksseitigen Blattbereichs 14 (d.h. vom Schriftzug " Restaurants R1 R2 R3 R4 R5") umringt

Bei einem nicht in den Figuren dargestellten Faltblatt gemäss einer weiteren bevorzugten Erfindungsvariante, das eine identische Form und identisch angeordnete Faltlinien hat wie das in den Figuren 1-4 dargestellte Faltblatt, ist der zentrale Blattbereich undurchsichtig ausgebildet, während der obere mittlere, der mittlere linksseitige, der untere mittlere und der mittlere rechtsseitige Blattbereich bis auf die auf diese Blattbereiche aufgedruckten Schriftzüge durchsichtig ausgebildet sind. Durch Faltungen entlang der Faltlinien sind wiederum zusammengefaltete Zustände des Faltblatts herstellbar, in denen jeweils der zentrale Blattbereich und einer der mittleren randseitigen Blattbereiche übereinander liegen, wobei hier dann jeweils die Vorderseite des zentralen Blattbereichs von vorne her durch den entsprechenden mittleren randseitigen Blattbereich hindurch sichtbar ist.

Zusammenfassend ist festzustellen, dass durch die Erfindung ein insbesondere als Prospekt verwendbares Faltblatt angegeben wird, das eine Mehrzahl von verschiedenen Darstellung auf einem vergleichbar kleinen Blattbereich ermöglicht und zudem einfach herstellbar ist.

## Patentansprüche

1. Faltblatt (10) mit wenigstens einem ersten Blattbereich (15), der mit einem ersten Aufdruck (25) bedruckt ist, einem zweiten Blattbereich (12, 14, 16, 18), der mit einem zweiten Aufdruck (52, 54, 56, 58) bedruckt ist und einer ersten Faltlinie (31, 32, 33, 34), wobei das Faltblatt (10) entlang der ersten Faltlinie (31, 32, 33, 34) derart zusammenfaltbar ist, dass in einem ersten zusammengefalteten Zustand des Faltblatts (10) der erste Blattbereich (15) und der zweite Blattbereich (12, 14, 16, 18) übereinander liegen, **dadurch gekennzeichnet, dass** der erste Blattbereich (15) aus einem lichtdurchlässigen Blattmaterial gefertigt ist und dass die beiden Blattbereiche (15, 12, 14, 16, 18) derart bedruckt und angeordnet sind, dass im ersten zusammengefalteten Zustand des Faltblatts (10) der zweite Aufdruck (52, 54, 56, 58) durch den ersten Blattbereich (15) hindurch derart sichtbar ist, dass sich der erste Aufdruck (25) und der zweite Aufdruck (52, 54, 56, 58) zu einer gedruckten Darstellung ergänzen.

2. Faltblatt (10) nach Anspruch 1, **dadurch gekennzeichnet, dass** es eine Vorderseite hat, auf welcher einer des ersten und zweiten Aufdrucks (25) derart sichtbar ist, dass er in einer ersten Ausrichtung des Faltblatts (10) mit im Wesentlichen horizontal angeordneter erster Faltlinie (33, 34) aufrecht steht, und eine Rückseite, auf welcher der andere des ersten und zweiten Aufdrucks (52, 58) derart sichtbar ist, dass er in der ersten Ausrichtung des Faltblatts (10) auf dem Kopf steht.

3. Faltblatt (10) nach Anspruch 1 oder 2, **dadurch gekennzeichnet, dass** das Faltblatt (10) wenigstens eine weitere Faltlinie (31, 32, 33, 34) hat sowie wenigstens einen weiteren Blattbereich (12, 14, 16, 18), wobei das Faltblatt (10) entlang der weiteren Faltlinie (31, 32, 33, 34) derart zusammenfaltbar ist, dass in einem weiteren zusammengefalteten Zustand des Faltblatts (10) der erste und der weitere Blattbereich (15, 12, 14, 16, 18) übereinander liegen, wobei der erste und der weitere Blattbereich (15, 12, 14, 16, 18) derart bedruckt und angeordnet sind, dass im weiteren zusammengefalteten Zustand des Faltblatts (10) der weitere Aufdruck (52, 54, 56, 58) durch den ersten Blattbereich (15) hindurch derart sichtbar ist, dass sich der erste Aufdruck (25) und der weitere Aufdruck (52, 54, 56, 58) zu einer gedruckten Darstellung ergänzen.

4. Faltblatt (10) nach einem der Ansprüche 1 bis 3, **dadurch gekennzeichnet, dass** es in einem ungefalteten Zustand die Form einer von einem konvexen Polygon begrenzten Fläche hat.

5. Faltblatt (10) nach Anspruch 3 und Anspruch 4, **dadurch gekennzeichnet, dass** es eine quadratische Form hat und genau drei weitere Faltlinien (31, 32, 33, 34) aufweist, wobei die insgesamt vier Faltlinien (31, 32, 33, 34) das Faltblatt (10) in neun flächengleiche quadratische Blattbereiche (11, 12, 13, 14, 15, 16, 17, 18, 19) unterteilen.

6. Faltblatt (10) nach einem der Ansprüche 1 bis 5, **dadurch gekennzeichnet, dass** der erste Blattbereich (15) aus einer durchsichtigen Kunststofffolie gebildet ist.

7. Faltblatt (10) nach einem der Ansprüche 1 bis 6, **dadurch gekennzeichnet, dass** das gesamte Faltblatt aus einem einheitlichen Blattmaterial gefertigt ist.

8. Faltblatt nach einem der Ansprüche 1 bis 7, **dadurch gekennzeichnet, dass** wenigstens einer des ersten und zweiten Aufdrucks eine topografische Karte darstellt, während der andere des ersten und zweiten Aufdrucks zu Orten auf der topografischen Karte Zusatzinformationen an denjenigen Stellen im zweiten Blattbereich enthält, die im ersten zusammengefalteten Zustand des Faltblatts in der Nähe dieser Orte sichtbar sind.

9. Faltblatt nach Anspruch 8, **dadurch gekennzeichnet, dass** es zusätzlich einen Blattbereich aufweist, der mit einer Werbebotschaft für eine Firma aus der Region bedruckt ist, die auf der topografischen Karte dargestellt ist.

10. Faltblatt nach einem der Ansprüche 1 bis 9, **dadurch gekennzeichnet, dass** der zweite Blattbereich ebenfalls aus einem lichtdurchlässigen Blattmaterial gefertigt ist und dass das Faltblatt eine zweite Faltlinie hat sowie einen dritten Blattbereich, wobei das Faltblatt entlang der ersten und zweiten Faltlinien derart zusammenfaltbar ist, dass in einem zweiten zusammengefalteten Zustand des Faltblatts der erste, der zweite und der dritte Blattbereich übereinander liegen, wobei die drei Blattbereiche derart bedruckt und angeordnet sind, dass im zweiten zusammengefalteten Zustand des Faltblatts der dritte Aufdruck durch den ersten und den zweiten Blattbereich hindurch derart sichtbar ist, dass sich die drei Aufdrucke zu einer gedruckten Darstellung ergänzen.
